# EUROPÄISCHE PATENTANMELDUNG

(11) **EP 0 563 754 A1**
(43) Veröffentlichungstag der Anmeldung: **06.10.1993**
(21) Anmeldenummer: 93104754.2
(22) Anmeldetag: 23.03.1993
(51) Int. Cl.: B01D 29/09, C10M 175/04, B01D 17/032, B01D 21/00

(54) **Reinigungsvorrichtung**

(30) Priorität: 25.03.1992 DE 9204019 U
(71) Anmelder: BERTLE FORDERTECHNIK, MATHIAS BERTLE, D-87459 Pfronten (DE)
(72) Erfinder: Bertle, Mathias, 87459 Pfronten (DE)
(74) Vertreter: Patentanwälte Beetz - Timpe - Siegfried Schmitt-Fumian - Mayr

(57) **Zusammenfassung**

Gegenstand der Erfindung ist eine Vorrichtung zur Reinigung von mit Feststoffpartikeln und Kohlenwasserstoffen verschmutzten Flüssigkeiten, insbesondere der Kühlschmiermittel von Werkzeugmaschinen, bestehend aus einem Absetzbehälter (2), einem Bandfilter (17, 21), einem Ölabscheider (29) und mindestens einer Förderpumpe (9). Gemäß der Erfindung ist die Förderpumpe (9) saugseitig mit dem Absetzbehälter (2) für gröbere Feststoffe und druckseitig mit einer über dem Bandfilter (17, 21) angeordneten Düsenanordnung (11) verbunden und unter dem Bandfilter (17, 21) ist mindestens eine langgestreckte Sedimentationskammer (15) für die feinen Feststoffpartikel vorgesehen, an deren Auslaufseite ein Ölabscheider (29, 30) angeordnet ist.

## Beschreibung

Die Erfindung betrifft eine Vorrichtung zur Reinigung von mit Feststoffpartikeln, Kohlenwasserstoffen u. dgl. verschmutzten Flüssigkeiten, wie Kühlschmiermittel von Werkzeugmaschinen, Schmutzwasser von Autowaschanlagen u. dgl., bestehend aus einem Absetzbehälter, einem Bandfilter, einem Ölabscheider und mindestens einer Förderpumpe.

Die in Werkzeugmaschinen zur Kühlung und Schmierung der Werkzeuge und Werkstücke verwendeten Kühlschmiermittel werden aus einem maschineneigenen Tank im Kreislauf geführt und unterliegen einer allmählich zunehmenden Verschmutzung durch Feststoffpartikel, insbesondere Feinspäne, Kohlenwasserstoffe, insbesondere Öl und auch Bakterien und andere Organismen. Nach längeren Betriebszeiten der Werkzeugmaschinen sinken die Kühl- und Schmiereigenschaften dieser meist als Dispersionen vorliegenden Flüssigkeiten, was sich nachteilig auf die Arbeitsqualität und die Spanleistung der Werkzeugmaschine sowie auf die Standzeiten der Werkzeuge auswirkt. Zur Vermeidung dieser Nachteile ist es daher notwendig, die KS-Mittel (Kühlschmier-Mittel) in regelmäßigen Zeitabständen vollständig auszutauschen, was nicht nur mit erheblichen Kosten, sondern auch mit Entsorgungsproblemen verbunden ist.

Zur Reinigung der KS-Mittel sind bereits verschiedene Systeme bekannt, die jedoch meist nur in komplexen Fertigungsanlagen sinnvoll eingesetzt werden können. Es handelt sich dabei meist um stationäre Zentralanlagen, in denen die KS-Mittel aus einer Vielzahl von Werkzeugmaschinen aufbereitet werden. Zu diesem Zweck wird die verschmutzte Flüssigkeit aus dem Sammeltank jeder Maschine in fahrbare Zwischenbehälter oder direkt in die zentrale Reinigungsanlage gepumpt und dort aufbereitet. Problematisch ist dieser mit erheblichem Aufwand verbundene Flüssigkeitstransport und die umständliche und häufig unzureichende Reinigung der maschineneigenen Sammeltanks von ggf. bereits verfestigten Ablagerungen. Für kleinere Betriebe sind derartige Zentralanlagen zu aufwendig.

Es sind auch bereits Reinigungsvorrichtungen für KS-Mittel bekannt, die direkt in die Werkzeugmaschine integriert sind. Abgesehen von einem relativ geringen Reinigungs-Wirkungsgrad werden diese integrierten Systeme wegen des hohen Konstruktions- und Kostenaufwands nur in komplexe Bearbeitungszentren eingebaut.

Aufgabe der Erfindung ist es, eine Reinigungsvorrichtung der Kühlschmier-Flüssigkeiten zu schaffen, die technisch einfach aufgebaut ist, auch verschiedenartig verschmutzte Flüssigkeiten mit einem hohen Wirkungsgrad reinigt und auch für kleinere Betriebe geeignet ist.

Diese Aufgabe wird erfindungsgemäß dadurch gelöst, daß die Vorrichtung mindestens einen Absetzbehälter, einen Bandfilter, einen Ölabscheider und mindestens eine Förderpumpe aufweist, die zu einer mobilen Einheit zusammengebaut sind. Erfindungsgemäß ist die als Saugpumpe ausgebildete Förderpumpe zwischen einem druckdicht verschließbaren Absetzbehälter und einer oberhalb des Bandfilters vorgesehenen Sprühdüsenanordnung angeordnet. Die Pumpe saugt die von größeren Feststoffpartikeln z. B. durch ein Gittersieb bereits befreite Flüssigkeit aus dem Absetzbehälter ab, wobei durch den sich dabei im geschmolzenen Behälter entwickelnden Unterdruck die verschmutzte Rohflüssigkeit aus dem Maschinentank über eine Schlauchleitung in selbstregelndem Fluß abgesaugt wird. Nach dem Durchlauf durch den Bandfilter erfolgt eine Sedimentation der feinkörnigen leichten Schmutzpartikel in einer großvolumigen Sedimentationswanne, in der eine ausreichend geringe horizontale Strömungsgeschwindigkeit herrscht. Am auslaufseitigen Endteil dieser Sedimentationswanne ist der Ölabscheider angeordnet, dessen mit geringer Umfangsgeschwindigkeit rotierendes Abscheideorgan in den oberen das auf geschwommene Öl enthaltenden Bereich der Flüssigkeit eintaucht. Das trommel- oder scheibenförmige Abscheideorgan hat relativ hohe adhäsive Eigenschaften gegenüber höherwertigen Kohlenwasserstoffen und eine wesentlich geringere Adhäsion bzw. Benetzbarkeit gegenüber den wäßrigen Bestandteilen der Flüssigkeit, so daß das Öl an den Oberflächen des Abscheideorgans anhaftet und bei dessen Umdrehung aus dem Flüssigkeitsbad herausbewegt wird. Über einen elastischen Abstreifer und eine Querrinne wird das abgeschiedene Öl in einen Auffangbehälter abgeführt, der an der Außenseite der Sedimentationswanne lösbar montiert ist. Die von Feststoffen und Öl befreite Flüssigkeit wird am Ende des Sedimentationsbehälters mittels einer Saugpumpe abgezogen und mit einem geeigneten Überdruck in den Tank der Maschine zurückgefördert.

Ein betriebswirtschaftlich wesentlicher Vorteil der erfindungsgemäßen Vorrichtung ergibt sich aus dem technisch einfachen robusten Aufbau, den geringen Außenabmessungen und insbesondere aus ihrer Mobilität. In periodischen Zeitabständen wird die Vorrichtung neben einer Werkzeugmaschine oder einem anderen Sammelbehälter für verschmutzte Flüssigkeiten aufgestellt und an deren Sammeltank angeschlossen. Die Flüssigkeit wird im kontinuierlichen Durchlauf gereinigt, ohne daß der Betrieb z. B. der Werkzeugmaschine unterbrochen werden müßte. Die Durchsatzleistung der Reinigungsvorrichtung ist zweckmäßig so ausgelegt, daß die Flüssigkeit innerhalb einer vorgegebenen Zeitspanne von ca. 2 bis 5 Stunden die Vorrichtung und den Sammelbehälter mehrfach durchläuft. Durch diesen vielfachen Durchlauf und durch den Überdruck, unter dem die gereinigte Flüssigkeit in den Maschinentank zurückgeführt wird, werden die im Behälter abgesetzten und ggf. verfestigten Ablagerungen freigespült und zusammen mit der Flüssigkeit der Reinigungsvorrichtung zugeführt.

Auf die vorstehend beschriebene Weise können eine beliebige Anzahl von Werkzeugmaschinen oder anderen Schmutzflüssigkeits-Erzeugern nacheinander oder ggf. auch gleichzeitig bedient werden. Versuche haben gezeigt, daß durch eine periodische Reinigung der KS-Flüssigkeit sich deren Standzeit um mindestens das Fünffache verlängert, so daß sich die erfindungsgemäße Vorrichtung auch in Kleinbetrieben mit nur einer geringen Anzahl an spanend arbeitenden Werkzeugmaschinen amortisiert.

Ein weiterer wesentlicher Vorzug der erfindungsgemäßen Reinigungsvorrichtung ist ihre universelle Einsatzmöglichkeit, die sich nicht auf unterschiedlichste Werkzeugmaschinen beschränkt, sondern sich auch auf andere technische Gebiete erstreckt, in denen mit Feststoffen und Kohlenwasserstoffen, insbesondere ölverschmutzte Flüssigkeiten anfallen. Beispielsweise seien hier Waschanlagen für Fahrzeuge genannt, in denen große Mengen an Schmutzwasser anfallen, das bisher mit erheblichem Aufwand entsorgt werden mußte. Für die effektive Reinigung unterschiedlichster Flüssigkeiten ist ferner von besonderer Bedeutung, daß die Verunreinigungen in gesonderten Fraktionen anfallen und somit einer jeweils geeigneten Weiterverwertung zugeführt werden können.

Weitere Besonderheiten und Vorzüge der Erfindung ergeben sich aus der folgenden Beschreibung eines bevorzugten Ausführungsbeispiels anhand der Zeichnung. Es zeigen:

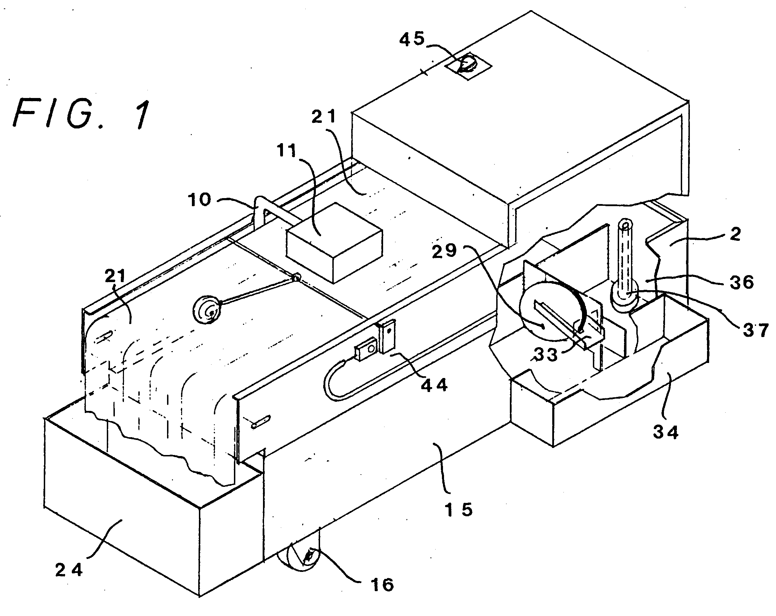

- Fig. 1: eine fahrbare Reinigungsvorrichtung in teilgeschnittener perspektivischer Darstellung;
- Fig. 2: die Reinigungsvorrichtung nach Fig. 1 im schematischen Längsschnitt;
- Fig. 3, 4: Querschnitte III-III bzw. IV-IV der Vorrichtung nach Fig. 2;
- Fig. 5: einen Ölabscheider in vergrößerter Darstellung;
- Fig. 6: eine Draufsicht auf die Wanne.

Die dargestellte Reinigungsvorrichtung ist eine insgesamt kompakte Einheit, die von Hand neben z. B. eine Werkzeugmaschine gefahren und über Schläuche an deren KS-Flüssigkeitstank angeschlossen wird. An der Vorderseite ist neben einer Zugdeichsel 1 ein Absetzbehälter 2 angeordnet, in dessen mittels eines Schnellverschlusses 3 druckdicht schließbarem Deckel 4 ein Einlaufstutzen 5 für die Schmutzflüssigkeit und ein von einem Siebkorb 6 umgebener vertikaler Tauchstutzen 7 befestigt sind. Der Tauchstutzen 7 führt über ein kurzes Saugrohr 8 zur Ansaugseite einer Motorpumpeneinheit 9, deren Druckrohr 10 mit einer düsenanordnung 11 verbunden ist.

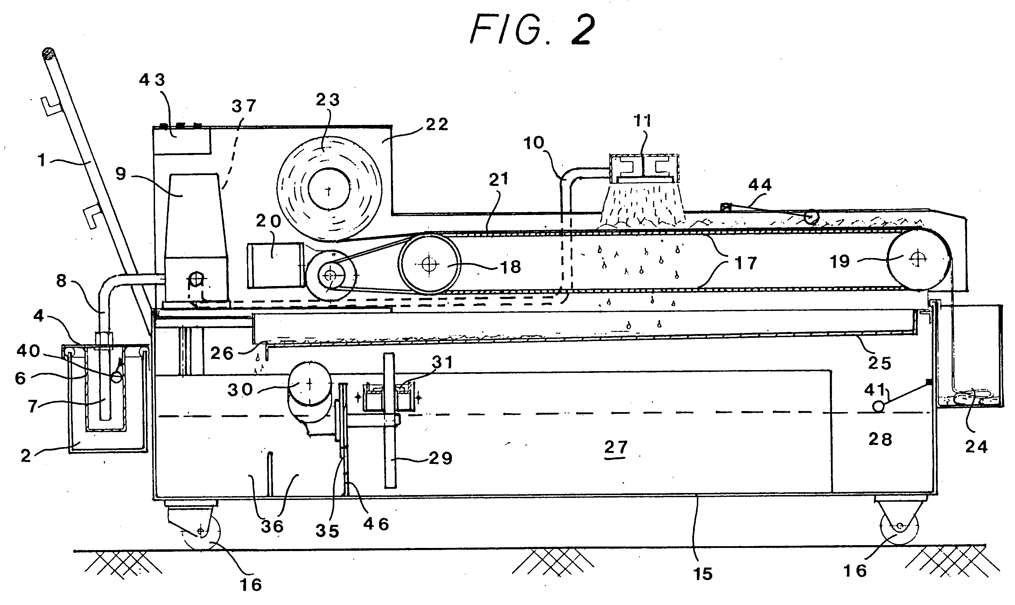

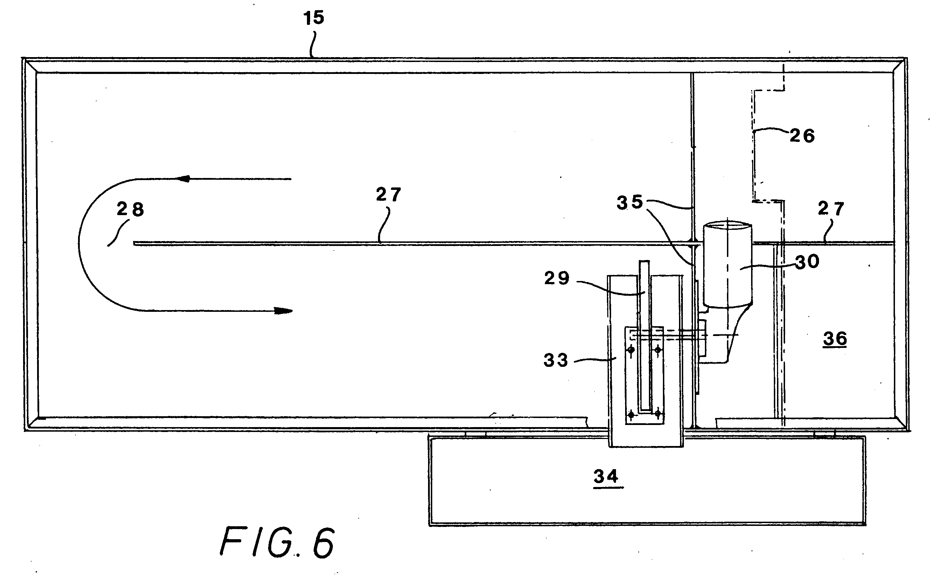

Wie aus Fig. 2 und 6 ersichtlich, ist oberhalb einer langgestreckten Wanne 15, die auch das von Laufrollen 16 getragene hier rechteckige Gehäuse der Vorrichtung bildet, ein poröses Endlosband 17 aus einem Kunststoffvlies, einem korrosionsfesten Drahtgeflecht, einem Gliederband od. dgl. um zwei Trommeln 18, 19 geführt, von denen eine Trommel 18 durch einen Motor angetrieben wird. Auf dem Obertrum des Endlosbandes 17 liegt bei der dargestellten Ausführung ein feinporöses Faservlies 21 auf, das durch die Bewegung des Endlosbandes 17 synchron mitgeführt von einem über dem Antriebsmotor 20 drehbar in einem Aufbau 22 gelagerten Wickel 23 abgezogen und zusammen mit den darauf abgelagerten Feststoffpartikeln in einem endseitigen Trog 24 gesammelt wird. Die Düsenanordnung 11 ist in einem geeigneten Abstand quer über dem Faservlies 21 montiert, so daß die von der Saugpumpe 9 geförderte verschmutzte Flüssigkeit ggf. von mehreren Düsen über die gesamte Breite des Faservlieses 21 gesprüht wird.

Unter dem Endlosband 17 ist ein der inneren Breite der Wanne 15 entsprechendes Leitblech 25 mit geringer Neigung zur Horizontalen lösbar montiert, das in einer einseitigen Tropfkante 26 endet. Nach Durchlaufen des Faservlieses 21 und des porösen Endlosbandes 17 tropft die Flüssigkeit auf dieses Leitblech 25 und fließt mit geringer Strömungsgeschwindigkeit in einer dünnen Schicht bis zu dessen endseitiger Tropfkante 26, wobei feinste Feststoffpartikel auf dem Leitblech 25 haften bleiben und gleichzeitig die gesamte Flüssigkeit zum Einlaufende der Vorrichtung transportiert wird. In der Wanne 15 ist in Längsrichtung eine vertikale Trennwand 27 angeordnet, die sich von der einlaufseitigen Wannenstirnwand in der Mittellängsachse bis kurz vor deren endseitiger Stirnwand erstreckt und einen endseitigen Flüssigkeitsumlauf 28 ermöglicht. Wie aus Fig. 6 ersichtlich, ist eine weitere Querwand 35 im Behälter 15 fest montiert, die das Behälterinnere in ein größeres Beruhigungsbecken sowie zusammen mit dem rechten Endabschnitt der Trennwand 27 in eine Einlaufkammer für die vom Leitblech abtropfende Flüssigkeit sowie in eine Entnahmekammer für die gereinigte Flüssigkeit unterteilt. Durch die Ausbildung der Trennwand 27 erhält das Beruhigungsbecken eine langgestreckte U-förmige Form, so daß erreicht wird, daß die durch je eine Öffnung 46 im unteren Teil der Querwand aus der Einlaufkammer einströmende Flüssigkeit im Beruhigungsbecken mit geringer Strömungsgeschwindigkeit fließt, so daß sich die ggf. fein suspendierten Tröpfchen an leichteren Medien, insbesondere Öltröpfchen, aufschwimmen können.

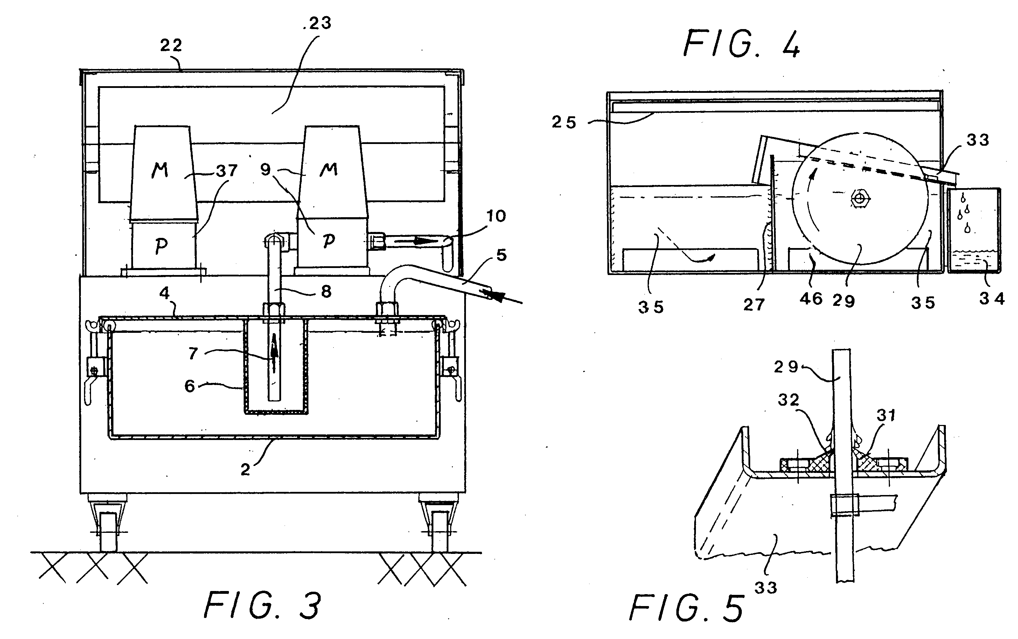

Am Auslaufende dieses einen Sedimentationsraum darstellenden Beruhigungsbeckens ist ein Ölabscheider 29, 31 vorgesehen, der bei dem dargestellten Ausführungsbeispiel als Abscheideorgan eine vertikal und quer zur Fließrichtung angeordnete Scheibe 29 aus einem geeigneten Kunststoff, z. B. Acrylglas, aufweist, die etwa bis zur Hälfte in die Flüssigkeit eintaucht und deren Durchmesser geringfügig kleiner als die Breite des Sedimentationsraums ist (vgl. Fig. 4 und 6). Diese Scheibe 29 wird von einem Motor 30 in langsame vorteilhaft schrittweise Umdrehungen versetzt und ist so beschaffen, daß sich die Öltröpfchen und andere organische Substanzen adhäsiv an ihrer Oberfläche anlagern und durch die langsame Drehbewegung aus der Flüssigkeit herausgehoben werden, während die ggf. mitgenommene wäßrige Flüssigkeit zurückfließt und abtropft.

Wie aus Fig. 5 ersichtlich, greift am oberen Teil der Scheibe 29 ein Abstreifer 31 an, dessen elastische Lippen 32 an beiden Stirnseiten sowie an der Umfangsfläche der Scheibe 29 anliegen und die an der Scheibe 29 anhaftenden Öltropfen in eine schräge Ablaufrinne 33 leiten, die über einem seitlich außen an der Wanne 15 abnehmbar befestigbaren Auffangbehälter 34 endet (Fig. 4). Die von den sedimentierten Feststoffen und den Öltröpfchen befreite Flüssigkeit fließt durch eine über dem Wannenboden befindliche Öffnung 46 der quer in der Wanne 15 befestigten Stauwand 35 in einen Entnahmeteil 36 und wird aus diesem mittels einer Tauchpumpe 37 über einen - nicht dargestellten - Druckschlauch mit ausreichend hohem Druck in den Tank der Werkzeugmaschine zurückgefördert. Durch die relativ hohe Strömungsenergie der zurückgepumpten gereinigten Flüssigkeit werden im Maschinentank kräftige Turbulenzen erzeugt, welche teilverfestigte Ablagerungen im Tank lösen und mit austragen. Durch kontinuierlich wiederholten Flüssigkeitsdurchlauf wird somit auch der Maschinentank wirksam gereinigt.

Die Motoren der Pumpen 9 und 37, der Motor 20 des Endlosbandes 17 und der Motor 30 der Scheibe 29 sind über eine Steuerung schaltungstechnisch miteinander verknüpft, wobei Schwimmer 40, 41 im Absetzbehälter 2 und in der Wanne 15 den jeweiligen Flüssigkeitsstand sowie ein Tastfühler 44 auf dem Filtervlies dessen Feststoffbelag überwachen und die oben genannten Motoren über eine Steuereinheit 43 mit Hauptschalter 45 entsprechend steuern.

Bei einer universell in kleineren und mittleren Fertigungsbetrieben einsetzbaren Reinigungsvorrichtung mit Außenabmessungen von 1850 mm Länge, 750 mm Breite und 850 mm Höhe betrug das Fassungsvermögen der Wanne etwa 150 Liter. Zwei auswechselbare Sammelgefäße für das abgeschiedene Öl und die vorzugsweise aus Spänen bestehenden Feststoffe waren an der Außenwandung der Wanne lösbar montiert. Sämtliche Einzelteile und Aggregate der Vorrichtung sind durch eine ggf. mehrteilige abnehmbare Haube geschützt.

Die erfindungsgemäße Vorrichtung kann nicht nur zum Reinigen der KS-Flüssigkeiten von Werkzeugmaschinen, sondern auch zur periodischen oder kontinuierlichen Aufbereitung von anderen durch Feststoffe und höherwertige Kohlenwasserstoffe stark verunreinigte Flüssigkeiten und Emulsionen eingesetzt werden, beispielsweise in Waschanlagen für Kraftfahrzeuge, Maschinen u. dgl., bei denen das Schmutzwasser im Kreislauf geführt oder - nach der Reinigung - in die Kanalisation abgeleitet wird.

Die Erfindung ist nicht auf das dargestellte und vorstehend beschriebene Ausführungsbeispiel beschränkt. So können z. B. statt der Scheibe 29 auch andere Ölabscheideorgane, z. B. Drehtrommeln mit glatten oder perforierten Oberflächen, angetriebene Endlosbänder od. dgl., eingesetzt werden. Ferner können Tropfbehälter z. B. am Absetzbehälter oder an anderen geeigneten Stellen angeordnet werden, um spezielle Fällmittel zur verbesserten Regeneration und/oder zur Kummulation der Ölanteile in die Flüssigkeit dosiert einzuführen. Schließlich kann in besonderen Fällen statt des Bandfilters auch ein anderer Feststoff-Filter, z. B. in Form einer Siebtrommel, vorgesehen sein.

Gemäß einer zweckmäßigen Ausgestaltung kann statt des gitterförmigen Endlosbandes 17 auch ein feinporöses Filterband, z. B. ein feines Gewebe oder ein zugfestes Vlies verwendet werden, auf dem sich die Feststoffpartikel ablagern. In diesem Fall kann das Filtervlies 21 entfallen. Es sollte jedoch ein Reinigungsgerät für das Filterband vorgesehen werden. Ferner kann die erfindungsgemäße Reinigungsvorrichtung nach Bedarf mit zusätzlichen Komponenten ausgerüstet werden. Um beispielsweise die in Schmutzflüssigkeiten häufig enthaltenen Mikroorganismen abzutöten, kann eine geeignete Komponente, z. B. ein UV-Strahler, in die Vorrichtung integriert werden, wobei der UV-Strahler bei dem dargestellten Ausführungsbeispiel oberhalb des Leitbleches eingebaut werden sollte.

## Patentansprüche

1. Vorrichtung zur Reinigung von mit Feststoffpartikeln und Kohlenwasserstoffen verschmutzten Flüssigkeiten, insbesondere der Kühlschmiermittel von Werkzeugmaschinen, bestehend aus einem Absetzbehälter, einem Bandfilter, einem Ölabscheider und mindestens einer Förderpumpe,
**dadurch gekennzeichnet,**
daß die Förderpumpe (9) saugseitig mit dem Absetzbehälter (2) für gröbere Feststoffe und druckseitig mit einer über dem Bandfilter (17, 21) angeordneten Düsenanordnung (11) verbunden ist, und
daß unter dem Bandfilter (17, 21) mindestens eine Sedimentationskammer (15) für die feinen Feststoffpartikel vorgesehen ist, an deren Auslaufseite ein Ölabscheider (29, 30) angeordnet ist.

2. Vorrichtung nach Anspruch 1,
dadurch gekennzeichnet,
daß zwischen dem Bandfilter (21) und der Sedimentationskammer (15) ein zur Horizontalen geringfügig geneigtes Leitblech (25) mit einer über dem Einlaufende der Sedimentationskammer (15) befindlichen Tropfkante (26) angeordnet ist.

3. Vorrichtung nach Anspruch 1 oder 2,
dadurch gekennzeichnet,
daß der Ölabscheider (29, 30) ein motorisch drehangetriebenes Abscheideorgan (29) enthält, das quer zur Fließrichtung in die Flüssigkeit eintaucht und mit einem Ölabstreifer (31) sowie mit einer Ableitrinne (33) versehen ist.

4. Vorrichtung nach Anspruch 3,
dadurch gekennzeichnet,
daß das Abscheideorgan (29) aus einem Material mit adhäsiven Eigenschaften für höherwertige Kohlenwasserstoffe besteht.

5. Vorrichtung nach einem der Ansprüche 1 bis 4,
dadurch gekennzeichnet,
daß der Ansaugstutzen (7) der Förderpumpe (9) in den druckdicht verschließbaren Absetzbehälter (2) hineinragt und von einem Siebkorb (6) umgeben ist.

6. Vorrichtung nach einem der Ansprüche 1 bis 5,
dadurch gekennzeichnet,
daß in der ggf. mit Laufrollen (16) versehenen Sedimentationswanne (15) eine vertikale Längswand (27) mit endseitigem Umlauf (28) angeordnet ist.

7. Vorrichtung nach einem der Ansprüche 1 bis 6,
dadurch gekennzeichnet,
daß das Bandfilter (21) ein von einem Wickel (23) abspulbares Filtervlies ist, das von einem angetriebenen porösen bzw. perforierten Endlosband (17) getragen und mitgenommen wird und das zusammen mit den darauf gesammelten Feststoffen in einen demontierbaren Kasten (24) abgeworfen wird.

8. Vorrichtung nach einem der Ansprüche 1 bis 7,
dadurch gekennzeichnet,
daß in den Flüssigkeitsbehältern (2, 15) befindliche Schwimmer (40, 41) mit einer Steuereinheit (43) zur Steuerung der Antriebsmotoren der Pumpen (9, 37) des Bandfilters (17, 21) und des Abscheideorgans (29) elektrisch verbunden sind.

9. Vorrichtung nach einem der Ansprüche 1 bis 8,
dadurch gekennzeichnet,
daß ein Mittel zum Abtöten von Mikroorganismen, insbesondere ein UV-Strahler, vorgesehen ist.

10. Vorrichtung nach einem der Ansprüche 1 bis 9,
dadurch gekennzeichnet,
daß das Bandfilter ein angetriebenes Endlosband aus einem feinporösen zugfesten Material ist.
